# EUROPÄISCHE PATENTSCHRIFT

(11) **EP 1 414 762 B1**
(45) Veröffentlichungstag und Bekanntmachung des Hinweises auf die Patenterteilung: **26.01.2005**
(21) Anmeldenummer: 02702683.0
(22) Anmeldetag: 18.03.2002
(51) Int. Cl.: C03B 27/044, C03B 27/012, C03C 21/00

(54) **VERFAHREN ZUM THERMISCHEN VORSPANNEN VON GLASPLATTEN**
METHOD FOR THERMALLY TEMPERING GLASS PANES
PROCEDE DE TREMPE THERMIQUE DE PLAQUES DE VERRE

(30) Priorität: 09.08.2001 WO PCT/IB01/01434
(43) Veröffentlichungstag der Anmeldung: 06.05.2004
(73) Patentinhaber: ISG-Interver Special Glass Ltd., CH-6045 Meggen (CH)
(72) Erfinder: SEIDEL, Horst, CH-6318 Walchwil (CH); HESSELBACH, Georg, F., CH-6045 Meggen (CH)
(74) Vertreter: Blum, Rudolf E.
(86) Internationale Anmeldenummer: PCT/IB2002/000794
(87) Internationale Veröffentlichungsnummer: WO 2003/014035

(56) Entgegenhaltungen:
- WO-A-96/01792
- DE-C- 602 431
- GB-A- 2 064 507
- GB-A- 2 232 414
- US-A- 4 065 284
- US-A- 4 308 046
- US-A- 6 067 820

## Beschreibung

### Technisches Gebiet

Die Erfindung betrifft ein Verfahren zum Vorspannen von Glasplatten sowie die Anwendung des Verfahrens gemäss den Oberbegriffen der unabhängigen Patentansprüche.

### Stand der Technik

Glasplatten mit druckvorgespannten Aussenflächen kommen bevorzugt dort zum Einsatz, wo erhöhte Anforderungen an die mechanische und/oder thermische Wechselfestigkeit bzw. Beanspruchbarkeit der Glasplatten, insbesondere im Brandfalle, gestellt werden bzw. die Verletzungsgefahr im Falle eines Glasbruchs herabgesetzt werden soll. Die Druckvorspannung in den Aussenflächen der Glasplatte bewirkt eine Erhöhung der Schlag- und Biegezugfestigkeit der Glasplatte, was zu einer Erhöhung der mechanischen Festigkeit gegen Bruch und einer Verbesserung der Temperaturwechselfestigkeit führt und die Glasplatte im Falle des Bruchs idealerweise in viele kleine Stücke zerspringen lässt. Insbesondere im Fahrzeugbau, z.B. im Schiffsbau, und in der modernen Architektur, wo Glasscheiben neben den traditionellen Aufgaben, wie thermische und akustische Trennung bestimmter Bereiche ohne optische Entkoppelung derselben, zunehmend auch wichtige konstruktionstechnische und feuerschutztechnische Aufgaben wahrnehmen, sind ein- bzw. mehrschichtige Sicherheits- und/oder Feuerschutzgläser aus Glasplatten mit druckvorgespannten Aussenflächen heute nicht mehr wegzudenken.

Das Vorspannen von Glasplatten erfolgt in der Praxis fast ausschliesslich auf chemischem oder thermischem Wege, wobei dem thermischen Vorspannen aus Kostengründen und aus Gründen der Dauerhaftigkeit der Druckvorspannung der Aussenflächen bei der Herstellung von vorgespannten Glasplatten üblicher Dicke klar der Vorrang gegeben wird. Beim thermischen Vorspannvorgang wird die Glasplatte kurzzeitig auf Temperaturen oberhalb der Transformationstemperatur des Glases und oft sogar bis knapp unter die Littleton- oder Erweichungstemperatur der verwendeten Glassorte (Temperatur, bei der das Glas eine Viskosität von 10^{7,6} dPa s aufweist) aufgeheizt und anschliessend rasch abgekühlt bzw. abgeschreckt, wobei die maximale Aufheiztemperatur, die Abkühlgeschwindigkeit und die Endtemperatur derartig gewählt werden, dass die beiden Aussenflächen der Glasplatte anschliessend bei Gebrauchstemperatur dauerhaft die gewünschte Druckvorspannung aufweisen. Je nach Glassorte und gewünschter Vorspannung ist es beispielsweise üblich, die Glasplatte innerhalb von wenigen Minuten in einem Aufheizofen auf eine Temperatur im zuvor erwähnten Bereich aufzuheizen und sodann innerhalb von ein bis zwei Minuten durch Anblasen mit kalter Luft auf Umgebungstemperatur abzukühlen. Infolge der von aussen wirkenden Kühlung "frieren" dabei zuerst die Aussenflächen der Glasplatte "ein", wobei sie sich anfänglich auf Grund der noch geringen Festigkeit des noch wärmeren Glases im Innern der Glasplatte praktisch ohne einen Aufbau von Spannungen zusammenziehen können. Kühlt nun auch das Glas im Inneren der Glasplatte weiter ab, so wird es durch das bereits recht feste Glas der Aussenflächen am Sichzusammenziehen gehindert, was in den Aussenflächen der Glasplatte zu einem Aufbau von Druckspannungen und im Inneren derselben zu einem Aufbau von Zugspannungen führt. Unterschreitet die Temperatur der Glasplatte anschliessend die Transformationstemperatur, so verbleiben die zu diesem Zeitpunkt vorhandenen Spannungen dauerhaft im Glas. Die verwendeten Begriffe wie "Transformationstemperatur", "Littletontemperatur", "Erweichungstemperatur" usw. sind dem Fachmann auf dem Gebiet der Glasverarbeitung geläufig und können bei Bedarf auch der Fachliteratur (z.B. S. Lohmeyer ..., Werkstoff Glas, Lexika-Verlag 1979, D-Grafenau) entnommen werden. Sie werden deshalb hier nicht im Detail erläutert.

Neben den eingangs erwähnten Vorteilen weisen die bekannten thermisch vorgespannten Glasplatten jedoch den Nachteil auf, dass die typischen Festigkeitswerte, bei denen eine Charge solcher Platten die in den heutigen Qualifikationsverfahren geforderten Grenzen betreffend die statistische Versagenswahrscheinlichkeit im Brandfalle erfüllt, recht gering sind, so dass einfach thermisch vorgespannte Glasscheiben ohne zusätzliche Ausscheidungs- oder Veredelungsmassnahmen, wie Heisslagerung zur Ausscheidung von unter Hitzeeinwirkung spontanbruchgefährdeten Scheiben und gegebenenfalls erneutes thermisches Vorspannen, heute in vielen Bereichen nicht eingesetzt werden können. Die Verbesserung wiederum dieser Scheiben durch die zuvor erwähnten Massnahmen ist zeit- und kostenintensiv, so dass die heute verfügbaren thermisch vorgespannten Glasplatten mit hohen Festigkeiten und geringer Versagenswahrscheinlichkeit im Brandfalle relativ teuer in der Herstellung sind.

### Darstellung der Erfindung

Es stellt sich daher die Aufgabe, ein Verfahren zum thermischen Vorspannen von Glasplatten zur Verfügung zu stellen, welche die Nachteile des Standes der Technik nicht aufweisen oder diese zumindest teilweise beheben.

Diese Aufgabe wird durch das Verfahren gemäss Patentanspruch 1 gelöst.

Demgemäss wird bei dem erfindungsgemässen Verfahren zum thermischen Vorspannen von Glasplatten die Glasplatte über ihren gesamten Querschnitt auf Temperaturen oberhalb der Transformationstemperatur des die Glasplatte bildenden Glasmaterials gebracht, also auf Temperaturen oberhalb derjenigen Temperatur, bei der das die Glasplatte bildende Glasmaterial eine Viskosität von 10¹³ dPa s aufweist. Im Bereich ihrer Aussenflächen weist die Glasplatte bei Beendigung des Aufheizens, d.h. zu Beginn ihres Transfers vom Aufheizofen zur Kühl- bzw. Abschreckvorrichtung, oder zu Beginn des Kühlens, d.h. direkt nach Beendigung des Transfers bzw. direkt vor Beginn des Anblasens und/oder Ansprühens mit Kühlmedium, Temperaturen auf, die einer Temperatur entsprechen, bei der das die Glasplatte bildende Glasmaterial eine Viskosität zwischen 10^{7.6} dPa s und 10⁶ dPa s aufweist, oder anders ausgedrückt, die zwischen der Littleton- oder Erweichungstemperatur und der Fliesstemperatur des Glases liegen. Direkt im Anschluss an das Aufheizen erfolgt dann, ohne weitere Zwischenschritte, das Kühlen der aufgeheizten Glasplatte durch mindestens anfänglich aktives und intensives Kühlen der Aussenflächen derselben derart, dass eine permanente Druckvorspannung in ihren Aussenflächen verbleibt. Der Transfer der aufgeheizten Glasplatte vom Aufheizofen zur Kühlanordnung gehört weder zum Aufheizen noch zum Kühlen und wird auch nicht als Zwischenschritt gemäss dem vorstehenden Satz verstanden.

Überraschenderweise hat sich gezeigt, dass sich mit dem erfindungsgemässen Verfahren auf kostengünstige Weise und mit kurzen und, falls gewünscht, auch kontinuierlichen Fertigungsprozessen Glasplatten mit geringer Versagenswahrscheinlichkeit im Brandfalle und hoher Biegezug- und Temperaturwechselfestigkeit herstellen lassen, so dass die bei den heute bekannten thermisch vorgespannten Glasplatten erforderlichen Ausscheidungs- und Veredelungsverfahren entfallen können. Hierdurch ist es möglich, sehr kostengünstige Brandschutzgläser zur Verfügung zu stellen.

In einer bevorzugten Ausführungsform des Verfahrens wird die Glasplatte derartig aufgeheizt und gegebenenfalls derartig vom Aufheizofen zur Kühlanordnung transferiert, dass sie bei Beendigung des Aufheizens und/oder bei Beginn des Kühlens über ihren Querschnitt gesehen überall bevorzugterweise im wesentlichen einheitliche Temperaturen aufweist, welche gleich oder grösser der Littleton- oder Erweichungstemperatur sind, bei der das die Glasplatte bildende Glasmaterial eine Viskosität von 10^{7.6} dPa s aufweist. Mit einem solchen Verfahren lassen sich besonders hoch vorgespannte Glasplatten herstellen.

Mit Vorteil erfolgt das Aufheizen der Glasplatte in zwei oder mehr Aufheizschritten, welche vorteilhafterweise in verschiedenen Aufheizkammern einer Vorspannanlage durchgeführt werden.

Wird sie dabei in einem Aufheizschritt, welcher dem letzten Aufheizschritt direkt vorangeht, bevorzugterweise gleichmässig über ihren gesamten Querschnitt auf eine niedrigere Temperatur aufgeheizt als in dem letzten Aufheizschritt, so ergibt sich der Vorteil, dass eine optimale Prozessführung begünstigt wird und sich zudem die Möglichkeit eröffnet, auf einfache Weise die Kapazität der Vorspannanlage zu erhöhen, indem mehrere Glasplatten zuerst gemeinsam in einem oder mehreren Lageröfen über einen längeren Zeitraum auf eine bereits möglichst hohe Zwischentemperatur aufgeheizt werden und sodann einzeln in einem weiteren, jedoch zeitlich recht kurzen letzten Aufheizschritt, z.B. in einem anderen Ofen, auf die gewünschte Endtemperatur gebracht und anschliessend gekühlt werden.

Bevorzugterweise wird die Glasplatte in demjenigen Aufheizschritt, der dem letzten Aufheizschritt vorangeht, auf eine Temperatur knapp unterhalb der Littleton- oder Erweichungstemperatur des die Glasplatte bildenden Glasmaterials aufgeheizt, also auf eine Temperatur, bei der das Glasmaterial eine Viskosität von etwa 10⁸ dPa s aufweist. Sodann wird die Glasplatte im letzten Aufheizschritt im Bereich ihrer Aussenflächen auf eine Temperatur aufgeheizt, die oberhalb der zuvor erwähnten Erweichungstemperatur liegt. Hierdurch ergibt sich der Vorteil, dass der letzte Aufheizschritt zeitlich relativ kurz ausgestaltet werden kann und gleichzeitig sichergestellt werden kann, dass sich die Glasinnentemperatur nach Beendigung des Aufheizens innerhalb eines engen Streubandes bewegt.

Weisen die Aussenflächen der Glasplatte bei Beendigung des Aufheizens und/oder bei Beginn des Kühlens eine deutlich höhere Temperatur auf als die Glasmitte, so erfolgt, in der Zeit zwischen dem Ende des Aufheizens und dem Beginn des Kühlens, in der die Glasplatte von der Heizkammer des Aufheizofens zur Kühlanordnung transferiert wird, und gegebenenfalls sogar noch bei Beginn des Kühlens, eine Nacherwärmung der Glasmitte, mit dem Resultat, dass sich bei intensivem Kühlen der Aussenflächen bis zu dem Zeitpunkt, zu dem die Temperatur der Glasmitte unter die Littleton- oder Erweichungstemperatur sinkt, infolge der dann vorliegenden grossen Temperaturdifferenz zwischen der Glasmitte und den Aussenflächen eine hohe Druckvorspannung erzeugen lässt.

Weist die Glasmitte bei Beendigung des Aufheizens und/oder bei Beginn des Kühlens eine Temperatur unterhalb der Littleton- bzw. Erweichungstemperatur auf und die Aussenflächenbereiche der Glasplatte eine Temperatur darüber, so kann eine hohe Glasmittentemperatur bei Beginn der Kühlung bei gleichzeitig guter Formstabilität der Glasplatte sichergestellt werden. Bei einer über den Querschnitt gesehen gleichmässigen Aufheizung der Glasplatte ist dies nicht möglich, da die Temperatur der Glasplatte aus Rücksicht auf die Formstabilität derselben geringer gewählt werden muss. Im vorliegenden Fall jedoch wird die Formstabilität der Scheibe zuerst durch die kühlere Glasmitte und anschliessend, bei gegebenenfalls erhöhter Glasmittentemperatur, durch die bereits wieder abkühlenden Aussenflächen der Glasplatte gewährleistet.

Das Kühlen der Aussenflächen der Glasplatte erfolgt bevorzugterweise durch Anblasen und/oder Ansprühen derselben mit einem gasförmigen Medium, einem flüssigen Medium oder einer Kombination derselben, wobei kalte Luft, bevorzugterweise mit hoher relativer Feuchte, oder ein Gemisch aus Luft und Wasser besonders bevorzugt sind, da diese Kühlmedien günstig und überall verfügbar sind und eine intensive Kühlung ermöglichen.

Um eine sowohl wirtschaftliche als auch wirkungsvolle Kühlung zu erzielen, ist es zudem von Vorteil, dass die Menge des zur Kühlung eingesetzten Kühlmediums pro Zeiteinheit, also der Massen- oder Volumenstrom, und/oder die Zusammensetzung des Kühlmediums über den Zeitverlauf des Kühlvorgangs verändert wird. So kann z.B. lediglich die Kühlluftmenge, mit der die Aussenflächen der aufgeheizten Glasplatte angeblasen werden, über den Kühlvorgang verändert werden. Auch können beispielsweise die Aussenflächen der Glasplatte zu Beginn des Kühlvorganges mit einem Luft-Wasser-Gemisch angesprüht werden und sodann, nach einem Einfrieren der Spannungszustände infolge eines Sinkens der Temperatur der Glasmitte unter die Transformationstemperatur des Glasmaterials, durch Anblasen mit Luft auf annähernd Umgebungstemperatur abgekühlt werden. Zudem ist es beispielsweise auch möglich, zuerst mit gekühlter Luft und anschliessend mit Luft mit Raumtemperatur anzublasen, und zwar mit gleichen oder auch verschiedenen Volumenströmen bzw. Anblasgeschwindigkeiten. Auch ist es vorgesehen, die Aussenflächen intervallweise anzusprühen bzw. anzublasen. Hierdurch lässt sich die Kühlkurve gezielt einstellen und Energie sparen.

Bevorzugterweise beträgt der Zeitraum zwischen der Beendigung des Aufheizens und dem Beginn des Kühlens, in welcher der Transfer der aufgeheizten Glasscheibe vom Aufheizofen zur Kühlanordnung erfolgt, weniger als 7 Sekunden, bevorzugterweise weniger als 5 Sekunden, so dass die Zeitspanne, innerhalb welcher die Glasplatte infolge freier Konvektion nur mit geringer Intensität gekühlt wird, was der Erzielung hoher Druckvorspannungen abträglich ist, relativ kurz ist.

In einer weiteren bevorzugten Ausführungsform des Verfahrens werden die Kanten der Glasplatte vorgängig zum Aufheizen derselben einer Kantenbearbeitung unterzogen, und zwar bevorzugterweise gebrochen, geschliffen, rotiert, poliert und/oder feuerpoliert.

Bevorzugterweise werden dabei die Übergänge von den Stirnflächen zu den Aussenflächen der Glasplatte, die nach dem Zuschneiden normalerweise scharfe Kanten bilden, als Fasen oder Rundungen ausgebildet, bevorzugterweise mit einer Erstreckung in die Stirn- und Aussenfläche hinein, welche im Bereich eines Drittels bis eines Sechstels, bevorzugterweise eines Fünftels bis eines Sechstels der Dicke der Glasplatte liegt. Durch diese Massnahme wird die Verletzungsgefahr beim Hantieren mit der Glasplatte herabgesetzt und die mechanische und thermische Belastbarkeit der fertig vorgespannten Glasplatte deutlich gesteigert.

In noch einer weiteren bevorzugten Ausführungsform des Verfahrens werden die Aussenflächen der fertig vorgespannten Glasplatte durch eine Abrasionsbehandlung mit einer Vielzahl von kleinen Oberflächenfehlern versehen, was mit Vorteil durch Strahlen mit abrasiven Partikel erfolgt und bei geeigneter Wahl des Strahlguts auch derartig möglich ist, dass mit blossem Auge keine Oberflächenfehler erkennbar sind. Hierdurch lässt sich die Streuung der Versagenswahrscheinlichkeit im Brandfalle der vorgespannten Glasscheiben herabsetzen.

In einer anderen Ausführungsform des Verfahrens werden die Aussenflächen der Glasplatte direkt nach dem Kühlen mit einer Beschichtung versehen, bevorzugterweise mit einer Oberflächenschutzschicht, was zu einer vorgespannten Glasplatte mit hoher mechanischer Festigkeit führt, da die Beschichtung eine Verletzung der Oberfläche durch Kratzer, z.B. bei der späteren Verwendung der Glasplatte als Fensterscheibe, wirkungsvoll verhindert und damit einer unerwünschten Schwächung derselben entgegenwirkt.

Als Ausgangsmaterialien zur Herstellung vorgespannter Glasplatten mit dem zuvor erwähnten erfindungsgemässen Verfahren werden bevorzugterweise Glasplatten aus Alumosilicat-Glas, aus Kalk-Natron-Glas, aus Borosilicat-Glas oder aus Erdalkali-Silikat-Glas verwendet. Bevorzugterweise sind diese Glasplatten nach dem Float-Verfahren hergestellt, welches dem Fachmann auf dem Gebiet der Flachglasherstellung ein Begriff ist. Solche Glasplatten sind kommerziell erhältlich, günstig im Preis und von guter Qualität.

Auch sind als Ausgangsmaterial Glasplatten vorgesehen, welche auf mindestens einer ihrer beiden Aussenflächen eine reliefartige Oberflächenstruktur aufweisen und/oder welche auf mindestens einer ihrer beiden Aussenflächen ganz oder teilweise mit Emaille- oder Siebdruckfarben bedruckt oder mittels Trägerfolien mit solchen Farben belegt sind. Auf diese Weise lassen sich z.B. Fassadenelemente mit undurchsichtigen Befestigungsbereichen besonders wirtschaftlich herstellen.

Bevorzugt ist es zudem, als Ausgangsmaterial Glasplatten zu verwenden, welche auf mindestens einer ihrer beiden Aussenflächen ganz oder teilweise mit einer Beschichtung, bevorzugterweise für den Sonnen- oder Wärmeschutz oder zur Strahlungsreflexion oder -absorption für den Brandschutz, versehen sind.

Dabei ist die Beschichtung vorteilhafterweise mindestens oder ausschliesslich im Randbereich der Glasplatte angeordnet, bevorzugterweise als mindestens 10 mm, bevorzugterweise mindestens 5 mm breites, entlang den Begrenzungskanten der Aussenfläche verlaufendes Beschichtungsband.

In noch einer anderen bevorzugten Ausführungsform des Verfahrens umfasst das Verfahren mindestens einen ersten und einen zweiten Vorspannvorgang, wobei mindestens einer der beiden Vorspannvorgänge und zwar bevorzugterweise der letzte Vorspannvorgang gemäss dem zuvor beschriebenen Verfahren bzw. gemäss einer der zuvor beschriebenen bevorzugten Ausführungsformen desselben ausgeführt wird. Hierdurch lässt sich die Versagenswahrscheinlichkeit im Brandfalle der durch das Verfahren hergestellten vorgespannten Glasplatten weiter herabsetzen.

Bevorzugterweise werden genau zwei, bevorzugterweise zwei thermische Vorspannvorgänge durchgeführt.

Auch ist es bevorzugt, wenn zwischen dem letzten Vorspannvorgang und dem diesem vorangehenden Vorspannvorgang keine Wärmebehandlung zur Ausscheidung von fehlerhaften, unter Hitzeeinwirkung spontanbruchgefährdeten Glasplatten durchgeführt wird, da sich hierdurch die Prozessdauer und die Herstellungskosten deutlich senken lassen.

Bevorzugterweise werden unter Anwendung des erfindungsgemässen Verfahrens Brandschutz- und/oder Sicherheitsglasscheiben für Gebäude und/oder Fahrzeuge oder Glasplatten als Ausgangsmaterial für die Herstellung der zuvor genannten Glasscheiben hergestellt.

### Kurze Beschreibung der Zeichnungen

Weitere Vorteile und Anwendungen der Erfindung ergeben sich aus der nun folgenden Beschreibung anhand der Figuren. Dabei zeigen:
Fig. 1 schematisch den Temperatur-Zeit-Verlauf eines ersten Vorspannverfahrens gemäss dem Stand der Technik;
Fig. 2 schematisch den Temperatur-Zeit-Verlauf eines ersten erfindungsgemässen Vorspannverfahrens;
Fig. 3 schematisch den Temperatur-Zeit-Verlauf eines zweiten erfindungsgemässen Vorspannverfahrens;
Fig. 4 schematisch den Temperatur-Zeit-Verlauf eines dritten erfindungsgemässen Vorspannverfahrens;
Fig. 5 schematisch den Temperatur-Zeit-Verlauf eines vierten erfindungsgemässen Vorspannverfahrens; und
Fig. 6 schematisch den Temperatur-Zeit-Verlauf eines fünften erfindungsgemässen Vorspannverfahrens mit zwei Vorspannvorgängen.

### Wege zur Ausführung der Erfindung

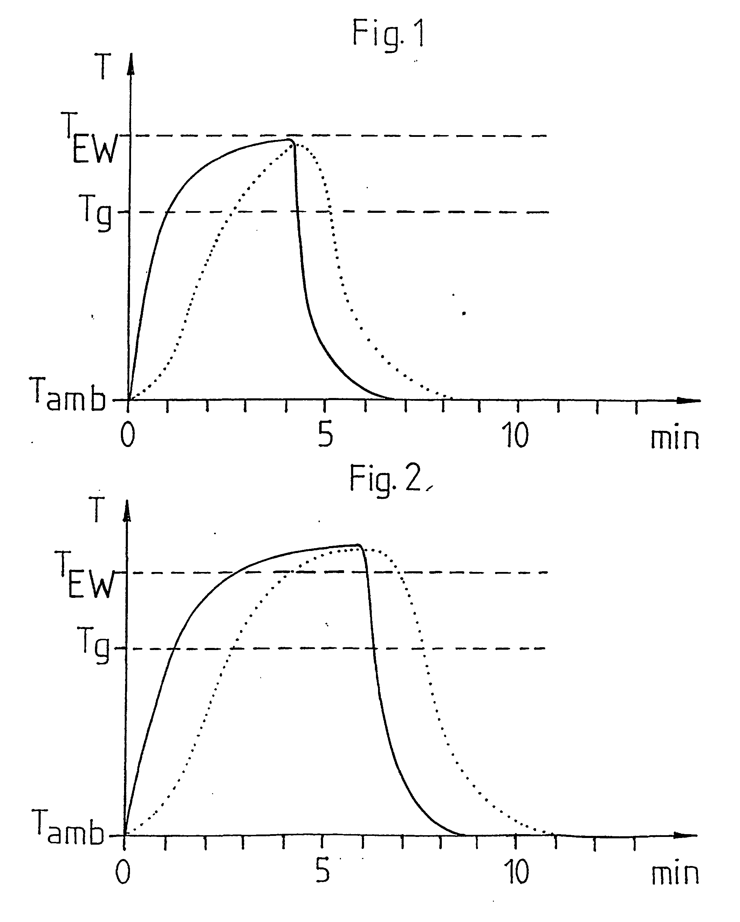

Bevor bevorzugte Wege zur Ausführung der Erfindung anhand der Figuren 2 bis 6 beschrieben werden, wird vorgängig anhand von Figur 1 ein thermisches Vorspannverfahren gemäss dem Stand der Technik diskutiert. Generell sei zu den Figuren bemerkt, dass diese schematisch den Temperatur-Zeit-Verlauf am Beispiel einer Glasplatte mit 6 mm Dicke darstellen, wobei die durchgezogenen Linien den Verlauf der Temperatur der Aussenflächen der Glasplatte darstellen und die gepunkteten Linien den Verlauf der Temperatur der Glasmitte.

Fig. 1 zeigt schematisch den Temperatur-Zeit-Verlauf bei einem einfachen thermischen Vorspannverfahren, wie es heute in der Industrie angewendet wird. Wie zu erkennen ist, wird die gesamte Glasplatte, d.h. deren Aussenflächen als auch die Glasmitte, innerhalb von einigen Minuten auf eine Temperatur knapp unterhalb der Littleton- oder Erweichungstemperatur T_{EW} des die Glasplatte bildenden Materials erwärmt, also auf eine Temperatur knapp unter der Temperatur, bei der das Material der Glasplatte eine Viskosität von 10^{7.6} dPa s aufweist, was z.B. bei Kalk-Natron-Glas bei etwa 680°C der Fall ist. Anschliessend wird die Glasplatte durch aktives Kühlen ihrer Aussenflächen, z.B. durch Anblasen derselben mit Luft, in kurzer Zeit auf Umgebungstemperatur Tamb abgekühlt. Dabei unterschreitet die Temperatur der Aussenflächen der Glasplatte (durchgezogene Linie)sehr rasch die Transformationstemperatur T_{g} des Glasmaterials während die Temperatur der Glasmitte (gestrichelte Linie) anfänglich nur sehr langsam fällt, so dass zu dem Zeitpunkt, zu welchem die Temperatur der Glasmitte unter die Transformationstemperatur T_{g} fällt, zwischen den Aussenflächen der Glasplatte und der Glasmitte derselben eine deutliche Temperaturdifferenz vorliegt, aus der nach erfolgtem weiteren Abkühlen der gewünschte permanente Spannungszustand mit Druckvorspannung im Bereich der Aussenflächen der Glasplatte und Zugvorspannung im Bereich der Glasmitte derselben resultiert.

Fig. 2 zeigt schematisch den Temperatur-Zeit-Verlauf bei einem erfindungsgemässen thermischen Vorspannverfahren. Wie deutlich zu erkennen ist, werden bei dem dargestellten Verfahren sowohl die Aussenflächen der Glasplatte als auch die Glasmitte in einem einzigen Aufheizschritt auf eine Temperatur deutlich oberhalb der Littleton- bzw. Erweichungstemperatur TEW aufgeheizt und sodann durch intensives Kühlen der Aussenflächen mittels Anblasen oder Ansprühen derselben mit einem Kühlmedium innert kurzer Zeit wieder auf Umgebungstemperatur Tamb abgekühlt, wobei die Temperaturdifferenz zwischen den Aussenflächen und der Glasmitte zu dem Zeitpunkt, zu welchem die Temperatur der Glasmitte unter die Transformationstemperatur Tg des Glases fällt, grösser ist als bei dem in Fig. 1 dargestellten Verfahren gemäss dem Stand der Technik.

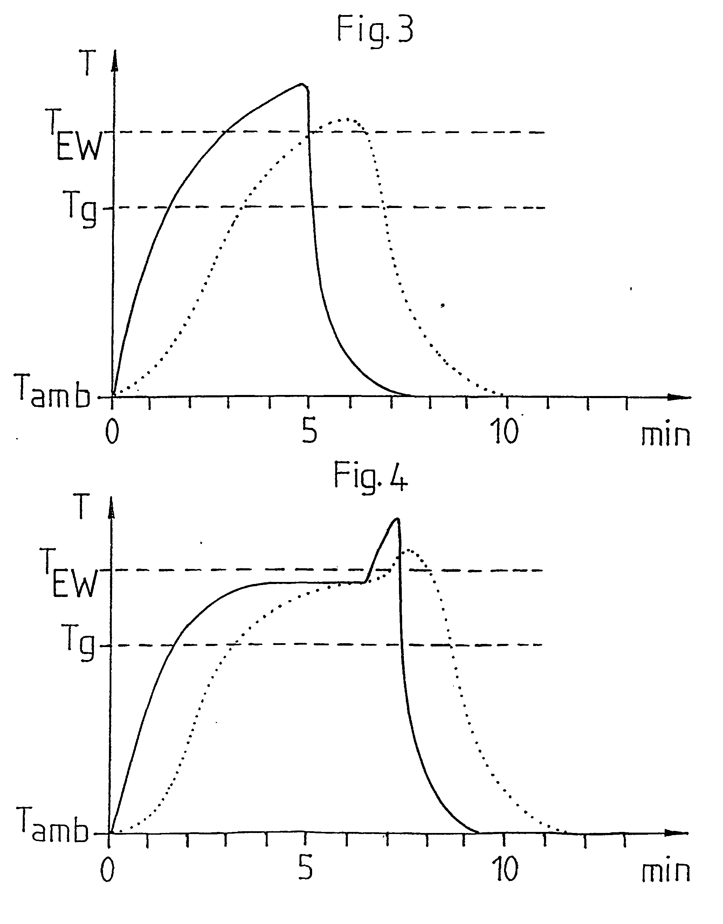

Fig. 3 zeigt schematisch den Temperatur-Zeit-Verlauf bei einem anderen erfindungsgemässen thermischen Vorspannverfahren. Wie der Darstellung zu entnehmen ist, wird die Glasplatte im Gegensatz zu dem in Fig. 2 schematisch dargestellten Verfahren derartig in einem Aufheizschritt aufgeheizt und anschliessend gekühlt, dass die Aussenflächen der Glasplatte zu Beginn des Kühlvorgangs eine Temperatur deutlich über der Littleton- oder Erweichungstemperatur T_{EW} des Glases aufweisen während die Temperatur der Glasmitte zu diesem Zeitpunkt knapp unterhalb der Littleton- oder Erweichungstemperatur T_{EW} liegt. Wie zu erkennen ist, kommt es bei Beginn des Kühlens zu einen raschen Abfall der Temperatur der Aussenflächen, während welchem in Folge Nacherwärmung die Temperatur in der Glasmitte anfänglich noch ansteigt und sodann mit einer gewissen Verzögerung ebenfalls zu sinken beginnt. Zu dem Zeitpunkt, zu welchem die Temperatur der Glasmitte unter die Transformationstemperatur T_{g} des Glasmaterials fällt, ist die Temperatur der Aussenflächen der Glasplatte im vorliegenden Fall noch niedriger als bei dem in Fig. 2 dargestellten Verfahren, so dass sich mit diesem Verfahren extrem hohe Druckvorspannungen in den Aussenflächen der Glasplatte erzielen lassen.

Fig. 4 zeigt schematisch den Temperatur-Zeit-Verlauf bei einem weiteren erfindungsgemässen thermischen Vorspannverfahren, bei welchem das Aufheizen der Glasplatte in zwei direkt aufeinanderfolgenden Aufheizschritten erfolgt. Wie deutlich zu erkennen ist, wird dabei die Glasplatte in dem ersten, zeitlich relativ langen Aufheizschritt in einem ersten Aufheizofen, in welchem gleichzeitig weitere Glasplatten aufgeheizt werden, über ihren gesamten Querschnitt gesehen auf eine im wesentlichen gleichmässige Temperatur aufgeheizt, bei der das verwendete Glasmaterial eine Viskosität von etwa 10⁸ dPa s aufweist. Sodann wird die Glasplatte in einen zweiten Aufheizofen transferiert, wo sie in einem zweiten Aufheizschritt in relativ kurzer Zeit im Bereich ihrer Aussenflächen auf eine Temperatur deutlich oberhalb der Littleton- oder Erweichungstemperatur T_{EW} aufgeheizt wird. Etwa zu dem Zeitpunkt, zu welchem die Glasmitte die Littleton- oder Erweichungstemperatur T_{EW} erreicht, erfolgt der Transfer zur Kühlanordnung, welcher nur wenige Sekunden dauert, und das anschliessende Kühlen der Aussenflächen der Glasplatte, bei welchem dann eine ähnliche Situation betreffend die Verläufe der Temperaturen der Aussenflächen und der Glasmitte auftritt, wie sie bereits bei Fig. 3 beschrieben wurde.

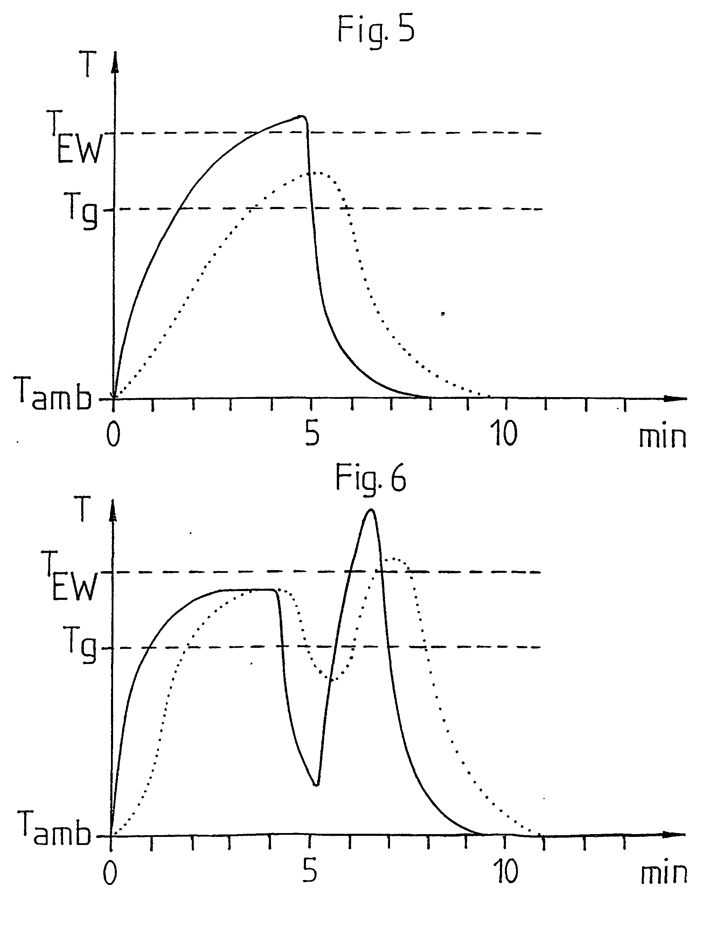

Fig. 5 zeigt schematisch den Temperatur-Zeit-Verlauf bei noch einem weiteren erfindungsgemässen thermischen Vorspannverfahren, welches im wesentlichen dem in Fig. 3 dargestellten Verfahren entspricht mit dem Unterschied, dass mit dem Kühlen bereits begonnen wird, während die Temperatur der Glasmitte in einem mittleren Bereich zwischen der Transformationstemperatur T_{g} und der Littleton- oder Erweichungstemperatur TEW liegt.

Fig. 6 zeigt schematisch den Temperatur-Zeit-Verlauf bei einem erfindungsgemässen Vorspannverfahren, bei welchem direkt hintereinander zwei thermische Vorspannvorgänge durchgeführt werden, welche jeweils einen Aufheizschritt umfassen. Wie zu erkennen ist, wird der erste Vorspannvorgang gemäss dem in Fig. 1 dargestellten thermischen Vorspannverfahren durchgeführt mit dem Unterschied, dass die Aufheiztemperatur etwas niedriger gewählt ist und der Kühlvorgang bereits kurz nachdem die Temperatur der Glasmitte die Transformationstemperatur T_{g} unterschritten hat, beendet wird und das Aufheizen für den zweiten Vorspannvorgang eingeleitet wird. Der zweite Vorspannvorgang wird im wesentlichen gemäss dem in Fig. 3 dargestellten Verfahren durchgeführt.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der folgenden Ansprüche ausgeführt werden kann.

## Patentansprüche

1. Verfahren zum thermischen Vorspannen von Glasplatten umfassend die Schritte
a) Aufheizen der Glasplatte auf eine Temperatur oberhalb derjenigen Temperatur, bei der das die Glasplatte bildende Glasmaterial eine Viskosität von 10¹³ dPa s aufweist, und direkt anschliessend
b) Kühlen der Aussenflächen der aufgeheizten Glasplatte zur Erzeugung einer permanenten Druckvorspannung in den Aussenflächen nach der Abkühlung der Glasplatte,
**dadurch gekennzeichnet, dass** die Glasplatte bei Beendigung des Aufheizens und/oder bei Beginn des Kühlens zumindest im Bereich ihrer Aussenflächen Temperaturen aufweist, welche einer Temperatur entsprechen, bei der das die Glasplatte bildende Glasmaterial eine Viskosität zwischen 10^{7.6} dPa s und 10⁶ dPa s aufweist.

2. Verfahren nach Anspruch 1, **dadurch gekennzeichnet, dass** die Glasplatte bei Beendigung des Aufheizens und/oder bei Beginn des Kühlens über ihren gesamten Querschnitt gesehen überall Temperaturen aufweist, welche im wesentlichen gleich oder grösser derjenigen Temperatur sind, bei der das die Glasplatte bildende Glasmaterial eine Viskosität von 10^{7.6} dPa s aufweist, und insbesondere, dass sie bei Beendigung des Aufheizens oder bei Beginn des Kühlens über ihren Querschnitt gesehen eine im wesentlichen einheitliche Temperatur aufweist.

3. Verfahren nach einem der vorangehenden Ansprüche, **dadurch gekennzeichnet, dass** das Aufheizen der Glasplatte in zwei oder mehr Aufheizschritten erfolgt, und insbesondere, dass mindestens zwei der Aufheizschritte in verschiedenen Aufheizkammern einer Vorspannanlage durchgeführt werden.

4. Verfahren nach Anspruch 3, **dadurch gekennzeichnet, dass** die Glasplatte in einem dem letzten Aufheizschritt direkt vorangehenden Aufheizschritt, insbesondere gleichmässig, auf eine niedrigere Temperatur aufgeheizt wird als in dem direkt nachfolgenden letzten Aufheizschritt und insbesondere, dass die Glasplatte in dem Aufheizschritt, welcher dem letzten Aufheizschritt vorangeht, auf eine Temperatur aufgeheizt wird, die kleiner ist als die Temperatur, bei der das die Glasplatte bildende Glasmaterial eine Viskosität von 10¹³ dPa s aufweist.

5. Verfahren nach einem der Ansprüche 3 bis 4, **dadurch gekennzeichnet, dass** die Glasplatte in dem Aufheizschritt, der dem letzten Aufheizschritt vorangeht, über ihren gesamten Querschnitt auf eine Temperatur aufgeheizt wird, bei der das die Glasplatte bildende Glasmaterial eine Viskosität von etwa 10⁸ dPa s aufweist und sodann im letzten Aufheizschritt im Bereich ihrer Aussenflächen auf eine Temperatur aufgeheizt wird, welche oberhalb derjenigen Temperatur liegt, bei der das die Glasplatte bildende Glasmaterial eine Viskosität 10^{7.6} dPa s aufweist.

6. Verfahren nach einem der vorangehenden Ansprüche, **dadurch gekennzeichnet, dass** die Aussenflächen der Glasplatte bei Beendigung des Aufheizens oder bei Beginn des Kühlens eine deutlich höhere Temperatur aufweisen als die Glasmitte.

7. Verfahren nach Anspruch 6, **dadurch gekennzeichnet, dass** die Aussenflächen der Glasplatte bei Beendigung des Aufheizens und/oder bei Beginn des Kühlens eine Temperatur oberhalb und die Glasmitte eine Temperatur unterhalb derjenigen Temperatur aufweisen, bei der das die Glasplatte bildende Glasmaterial eine Viskosität von 10^{7.6} dPa s aufweist.

8. Verfahren nach einem der vorangehenden Ansprüche, **dadurch gekennzeichnet, dass** das Kühlen **dadurch** erfolgt, dass die Aussenflächen der Glasplatte mit einem gasförmigen und/oder flüssigen Kühlmedium, insbesondere mit kalter Luft oder einem Luft/Wasser-Gemisch, angeblasen bzw. angesprüht werden.

9. Verfahren nach Anspruch 8, **dadurch gekennzeichnet, dass** beim Kühlen der Massen- oder Volumenstrom und/oder die Zusammensetzung des Kühlmediums über den Zeitverlauf verändert wird.

10. Verfahren nach einem der Ansprüche 8 bis 9, **dadurch gekennzeichnet, dass** das Anblasen oder Ansprühen der Aussenflächen mit einem gasförmigen und/oder flüssigen Kühlmedium intervallweise erfolgt.

11. Verfahren nach einem der vorangehenden Ansprüche, **dadurch gekennzeichnet, dass** zwischen der Beendigung des Aufheizens und dem Beginn des Kühlens weniger als 7 Sekunden, insbesondere weniger als 5 Sekunden vergehen.

12. Verfahren nach einem der vorangehenden Ansprüche, **dadurch gekennzeichnet, dass** die Kanten der Glasplatte vorgängig zum Aufheizen einer Kantenbearbeitung unterzogen werden, insbesondere gebrochen, geschliffen, rotiert, poliert und/oder feuerpoliert werden.

13. Verfahren nach Anspruch 12, **dadurch gekennzeichnet, dass** bei der Kantenbearbeitung die Übergänge von den Stirnflächen zu den Aussenflächen der Glasplatte als Fasen oder Rundungen ausgebildet werden, insbesondere mit einer Erstreckung in die Stirn- und Aussenfläche hinein, die im wesentlichen einem Drittel bis einem Sechstel, insbesondere einem Fünftel bis einem Sechstel der Dicke der Glasplatte entspricht.

14. Verfahren nach einem der vorangehenden Ansprüche, **dadurch gekennzeichnet, dass** die Aussenflächen der Glasplatte nach dem Kühlen einer Abrasionsbehandlung ausgesetzt werden, insbesondere mit abrasiven Partikel gestrahlt werden, und zwar insbesondere derart, dass mit blossem Auge keine Verletzung der Glasoberfläche sichtbar ist.

15. Verfahren nach einem der vorangehenden Ansprüche, **dadurch gekennzeichnet, dass** die Aussenflächen der Glasplatte direkt nach dem Kühlen mit einer Beschichtung versehen werden.

16. Verfahren nach einem der vorangehenden Ansprüche, **dadurch gekennzeichnet, dass** als Ausgangsmaterial eine Glasplatte aus Alumosilicat-Glas, aus Kalk-Natron-Glas, aus Borosilicat-Glas oder aus Erdalkali-Silikat-Glas verwendet wird, und insbesondere, dass als Ausgangsmaterial eine Floatglasplatte verwendet wird.

17. Verfahren nach einem der vorangehenden Ansprüche, **dadurch gekennzeichnet, dass** als Ausgangsmaterial eine Glasplatte verwendet wird, welche auf mindestens einer ihrer beiden Aussenflächen eine reliefartige Oberflächenstruktur aufweist.

18. Verfahren nach einem der vorangehenden Ansprüche, **dadurch gekennzeichnet, dass** als Ausgangsmaterial eine Glasplatte verwendet wird, welche auf mindestens einer ihrer beiden Aussenflächen ganz oder teilweise mit Emaille- oder Siebdruckfarben bedruckt oder mittels Trägerfolien mit solchen Farben belegt ist.

19. Verfahren nach einem der vorangehenden Ansprüche, **dadurch gekennzeichnet, dass** als Ausgangsmaterial eine Glasplatte verwendet wird, welche auf mindestens einer ihrer beiden Aussenflächen ganz oder teilweise mit einer Beschichtung, insbesondere für den Sonnen- oder Wärmeschutz oder zur Strahlungsreflexion- oder -absorption für den Brandschutz, versehen ist.

20. Verfahren nach Anspruch 19, **dadurch gekennzeichnet, dass** die Beschichtung mindestens oder ausschliesslich im Randbereich der Glasplatte angeordnet ist, insbesondere als mindestens 10 mm breites, insbesondere mindestens 5 mm breites Beschichtungsband, welches entlang den Begrenzungskanten einer Aussenfläche verläuft.

21. Verfahren zur Herstellung einer vorgespannten Glasplatte, wobei das Verfahren mindestens einen ersten und einen zweiten Vorspannvorgang umfasst, **dadurch gekennzeichnet, dass** mindestens einer der Vorspannvorgänge, insbesondere der letzte der Vorspannvorgänge, gemäss dem Verfahren nach einem der vorangehenden Ansprüche durchgeführt wird.

22. Verfahren nach Anspruch 21, **dadurch gekennzeichnet, dass** genau zwei Vorspannvorgänge durchgeführt werden und insbesondere, dass zwischen diesen Vorspannvorgängen keine Wärmebehandlung zur Ausscheidung von fehlerhaften, unter Hitzeeinwirkung spontanbruchgefährdeten Glasplatten durchgeführt wird.

23. Anwendung des Verfahrens nach einem der vorangehenden Ansprüche zur Herstellung von Brandschutz- und/oder Sicherheitsglasscheiben für Gebäude und/oder Fahrzeuge oder zur Herstellung von Glasplatten als Ausgangsmaterial für die Herstellung solcher Glasscheiben.

## Claims

1. Method for thermally tempering glass panes, comprising the steps of
a) heating the glass pane to a temperature above the temperature at which the glass material forming the glass pane has a viscosity of 10 ¹³ dPa s, and directly thereafter,
b) cooling the outer surfaces of the heated glass pane in order to generate a permanent compressive stress in the outer surfaces after the cooling off of the glass pane,
**characterized in that** the glass pane at the end of the heating and/or at the beginning of the cooling at least in the area of its outer surfaces features temperatures which correspond to a temperature at which the glass material forming the glass pane has a viscosity between 10 ^{7,6} dPa s and 10 ⁶ dPa s.

2. Method according to claim 1, **characterized in that** the glass pane at the end of the heating and/or at the beginning of the cooling over its entire cross-section features temperatures which are substantially equal to or higher than the temperature at which the glass material forming the glass pane has a viscosity of 10 ^{7,6} dPa s, and in particular that it features at the end of the heating or at the beginning of the cooling a substantially uniform temperature over its cross-section.

3. Method according to one of the preceding claims, **characterized in that** the heating of the glass pane is effected in two or more heating steps, and in particular that at least two of the heating steps take place in different heating chambers of a tempering facility.

4. Method according to claim 3, **characterized in that** the glass pane is heated in one heating step directly preceding the last heating step, in particular uniformly, to a lower temperature than in the direct subsequent last heating step, and in particular that the glass pane is heated in the heating step which precedes the last heating step to a temperature which is lower than the temperature at which the glass material forming the glass pane has a viscosity of 10 ¹³ dPa s.

5. Method according to one of the claims 3 to 4, **characterized in that** the glass pane is heated in the heating step which precedes the last heating step across its entire cross-section to a temperature at which the glass material forming the glass pane has a viscosity of about 10 ⁸ dPa s and is thereafter heated in a last heating step in the area of its outer surfaces to a temperature which is above the temperature at which the glass material forming the glass pane has a viscosity of 10 ^{7,6} dPa s.

6. Method according to one of the preceding claims, **characterized in that** the outer surfaces of the glass pane have at the end of the heating or at the beginning of the cooling a distinct higher temperature than the centre of the glass.

7. Method according to claim 6, **characterized in that** the outer surfaces of the glass pane have at the end of the heating and/or at the beginning of the cooling a temperature above and the centre of the glass a temperature below the temperature at which the glass material forming the glass pane has a viscosity of 10 ^{7,6} dPa s.

8. Method according to one of the preceding claims, **characterized in that** the cooling is performed **in that** the outer surfaces of the glass pane are blown or sprayed at with a gaseous and/or liquid cooling medium, in particular with cold air or an air/water mixture.

9. Method according to claim 8, **characterized in that** during cooling the mass flow or volume flow and/or the composition of the cooling medium is changed over the course of time.

10. Method according to one of the claims 8 to 9, **characterized in that** the blowing or spraying at the outer surfaces with a gaseous and/or liquid cooling medium is effected in intervals.

11. Method according to one of the preceding claims, **characterized in that** between the end of the heating and the beginning of the cooling, less than 7 seconds, in particular less than 5 seconds pass.

12. Method according to one of the preceding claims, **characterized in that** ahead of the heating, the edges of the glass pane are subjected to a machining of the edges, in particular are made free of sharp edges, ground, rotated, polished and/or fire polished.

13. Method according to claim 12, **characterized in that** at the machining of the edges the transitions from the front surfaces to the outer surfaces of the glass pane are formed as chamfers or roundings, in particular with an extension into the front surface and into the outer surface which substantially corresponds to one third up to one sixth, in particular to one fifth up to one sixth of the thickness of the glass pane.

14. Method according to one of the preceding claims, **characterized in that** the outer surfaces of the glass pane after the cooling are subjected to an abrasion treatment, in particular are blasted with abrasive particles, and in particular in such a manner that no injury of the glass surface is visible by the naked eye.

15. Method according to one of the preceding claims, **characterized in that** the outer surfaces of the glass pane are provided with a coating directly after the cooling down.

16. Method according to one of the preceding claims, **characterized in that** a glass pane of aluminio-silicate glass, of soda-lime glass, of borosilicate glass or of alkaline earth silicate glass is used as base material, and in particular that a pane of float glass is used as base material.

17. Method according to one of the preceding claims, **characterized in that** a glass pane is used as base material, which has on at least one of its two outer surfaces a relief-like surface structure.

18. Method according to one of the preceding claims, **characterized in that** a glass pane is used as base material, which is completely or partly printed by enamel or screen printing colours or is coated by supporting foils with such colours on at least one of its two outer surfaces.

19. Method according to one of the preceding claims, **characterized in that** a glass pane is used as base material which is provided on at least one of its two outer surfaces completely or partly with a coating, in particular for the protection against sun or heat or for the radiation reflection or absorption for the purpose of fire protection.

20. Method according to claim 19, **characterized in that** the coating is placed at least or exclusively at the edge area of the glass pane, in particular as a coating strip with a width of at least 10 mm, in particular at least 5 mm, which extends along the bordering edges of an outer surface.

21. Method for producing a tempered glass pane, whereby the method includes at least a first and a second tempering process, **characterized in that** at least one of the tempering processes, in particular the last of the tempering processes, is performed in accordance with the method of one of the preceding claims.

22. Method according to claim 21, **characterized in that** exactly two tempering processes are performed and in particular that between these tempering processes no heat treatment for a segregation of defective glass panes, which under influence of heat are at risk to spontaneously crack, is performed.

23. Application of the method according to one of the preceding claims for the production of fire protection glass panes and/or safety glass panes for buildings and/or vehicles or for the production of glass panes as base material for the production of such glass panes.

## Revendications

1. Procédé de trempe thermique de plaques de verre comprenant les stades dans lesquels :
a) on chauffe la plaque de verre à une température supérieure à la température à laquelle le verre formant la plaque de verre a une viscosité de 10¹³ dPa.s et immédiatement ensuite,
b) on refroidit les surfaces extérieures de la plaque de verre chauffée pour produire une précontrainte permanente de compression dans les surfaces extérieures après le refroidissement de la plaque de verre,
**caractérisé en ce que** la plaque de verre a, à la fin du chauffage et/ou au début du refroidissement, au moins dans la région de ses surfaces extérieures, des températures qui correspondent à une température pour laquelle le verre formant la plaque de verre a une viscosité comprise entre 10^{7,6} dPa.s et 10⁶ dPa.s.

2. Procédé suivant la revendication 1, **caractérisé en ce que** la plaque de verre a, à la fin du chauffage et/ou au début du refroidissement, sur toute sa section transversale, partout des températures qui sont sensiblement supérieures ou égales à la température à laquelle le verre formant la plaque de verre a une viscosité de 10^{7,6} dPa.s et notamment **en ce qu'**elle a, à la fin du chauffage ou au début du refroidissement, sur toute sa section transversale, une température sensiblement uniforme.

3. Procédé suivant l'une des revendications précédentes, **caractérisé en ce que** l'on effectue le chauffage de la plaque de verre en deux ou plusieurs stades de chauffage, et notamment **en ce que** l'on effectue deux des stades de chauffage, dans des chambres de chauffage différentes d'une installation de trempe.

4. Procédé suivant la revendication 3, **caractérisé en ce que** l'on chauffe la plaque de verre dans un stade de chauffage précédant directement le dernier stade de chauffage, notamment uniformément, à une température plus basse que dans le dernier stade de chauffage venant immédiatement ensuite et notamment **en ce que** l'on chauffe la plaque de chauffage, dans le stade de chauffage qui précède le dernier stade de chauffage, à une température qui est inférieure à une température à laquelle le verre formant la plaque de chauffage à une viscosité de 10¹³ dPa.s.

5. Procédé suivant l'une des revendications 3 à 4, **caractérisé en ce que** l'on chauffe la plaque de verre dans le stade de chauffage, qui précède le dernier stade de chauffage, sur toute sa section transversale, à une température à laquelle le verre formant la plaque de chauffage a une viscosité d'environ 10⁸ dPa.s et on la chauffe ensuite immédiatement dans le dernier stade de chauffage dans la zone de ses surfaces extérieures à une température qui est supérieure à la température à laquelle le verre formant la plaque de verre a une viscosité de 10^{7,6} dPa.s.

6. Procédé suivant l'une des revendications précédentes, **caractérisé en ce que** les surfaces extérieures de la plaque de verre ont, à la fin du chauffage ou au début du refroidissement, une température nettement plus haute que le verre au milieu.

7. Procédé suivant la revendication 6, **caractérisé en ce que** les surfaces extérieures de la plaque de verre ont, à la fin du chauffage et/ou au début du refroidissement, une température supérieure et le verre au milieu a une température inférieure à la température à laquelle le verre formant la plaque de verre a une viscosité de 10^{7,6} dPa.s.

8. Procédé suivant l'une des revendications précédentes, **caractérisé en ce que** l'on effectue le refroidissement en insufflant ou en projetant, sur les surfaces extérieures de la plaque de verre, un fluide de refroidissement gazeux et/ou liquide, notamment de l'air froid ou un mélange d'air et d'eau.

9. Procédé suivant la revendication 8, **caractérisé en ce qu'**au refroidissement, on modifie le courant massique ou volumique et/ou la composition du fluide de refroidissement au cours du temps.

10. Procédé suivant l'une des revendications 8 à 9, **caractérisé en ce que** on effectue l'insufflation et/ou la projection sur les surfaces extérieures d'un fluide de refroidissement gazeux et/ou liquide de temps en temps.

11. Procédé suivant l'une des revendications précédentes, **caractérisé en ce qu'**il s'écoule entre la fin du chauffage et le début du refroidissement moins de 7 secondes, notamment moins de 5 secondes.

12. Procédé suivant l'une des revendications précédentes, **caractérisé en ce que** l'on soumet les bords de la plaque de verre avant le chauffage à un usinage de bord, notamment en les découpant, meulant, passant autour, polissant et/ou rebrûlant.

13. Procédé suivant la revendication 12, **caractérisé en ce que** lors de l'usinage des bords, on constitue les transitions des surfaces latérales ou des surfaces extérieures de la plaque de verre en biseaux ou en arrondis s'étendant notamment dans la surface frontale et extérieure, suivant une étendue qui correspond sensiblement d'un tiers à un sixième, notamment d'un cinquième à un sixième, de l'épaisseur de la plaque de verre.

14. Procédé suivant l'une des revendications précédentes, **caractérisé en ce que** l'on soumet les surfaces extérieures de la plaque de verre après le refroidissement, à un traitement d'abrasion, notamment en y projetant des particules abrasives et notamment de façon à ce qu'il n'apparaisse plus à l'oeil nu de blessure de la surface du verre.

15. Procédé suivant l'une des revendications précédentes, **caractérisé en ce que** l'on munit les surfaces extérieures de la plaque de verre, directement après le refroidissement, d'un revêtement.

16. Procédé suivant l'une des revendications précédentes, **caractérisé en ce que** l'on utilise comme matière première une plaque de verre en verre à l'aluminosilicate, en verre à base de soude et de chaux, en verre au borosilicate ou en verre au silicate de métal alcalin, et notamment on utilise comme matière première, une plaque de verre flotté.

17. Procédé suivant l'une des revendications précédentes, **caractérisé en ce que** l'on utilise comme matière première une plaque de verre, qui a une structure superficielle en relief sur au moins l'une de ses deux faces.

18. Procédé suivant l'une des revendications précédentes, **caractérisé en ce que** l'on utilise comme matière première une plaque de verre, qui est imprimée sur au moins l'une de ses deux surfaces extérieures en tout ou partie par des encres-émail ou par des encres de sérigraphie ou sur laquelle est apposée des encres de ce genre au moyen de feuille support.

19. Procédé suivant l'une des revendications précédentes, **caractérisé en ce que** l'on utilise comme matière première une plaque de verre, qui est munie sur au moins l'une de ses deux surfaces extérieures en tout ou partie d'un revêtement, notamment pour la protection vis-vis du soleil ou de la chaleur ou pour la réflexion ou l'absorption du rayonnement en vue de la protection vis-à-vis de l'incendie.

20. Procédé suivant la revendication 19, **caractérisé en ce que** l'on met le revêtement au moins ou exclusivement dans la zone de bord de la plaque de verre, notamment sous la forme d'une bande de revêtement d'une largeur d'au moins 10 mm, notamment d'une largeur d'au moins 5 mm, qui s'étend le long des bords de démarcation d'une surface extérieure.

21. Procédé de production d'une plaque de verre trempée, le procédé comprenant au moins une première et une deuxième opérations de trempe, **caractérisé en ce qu'**au moins l'une des opérations de trempe, notamment la dernière des opérations de trempe est effectuée par le procédé suivant l'une des revendications précédentes.

22. Procédé suivant la revendication 21, **caractérisé en ce que** l'on effectue exactement deux opérations de trempe et notamment **en ce que** l'on n'effectue pas, entre ces opérations, de traitement thermique pour éliminer des plaques de verre défectueuses sujettes à se rompre spontanément sous l'effet de la chaleur.

23. Utilisation du procédé suivant l'une des revendications précédentes pour produire des vitres de protection vis-à-vis de l'incendie et/ou de sécurité pour des bâtiments et/ou des véhicules ou pour produire des plaques de verre servant de matière première pour la production de vitres de ce genre.
